# EUROPEAN PATENT SPECIFICATION

(11) **EP 0 802 003 B1**
(45) Date of publication and mention of the grant of the patent: **17.01.2001**
(21) Application number: 97201074.8
(22) Date of filing: 12.04.1997
(51) Int. Cl.: B21K 15/02

(54) **Method for manufacturing a horseshoe provided with at least one clip**
Verfahren zur Herstellung eines Hufeisens mit mindestens einem Stollen
Procédé de fabrication d'un fer à cheval ayant au moins un crampon

(30) Priority: 17.04.1996 NL 1002886
(43) Date of publication of application: 22.10.1997
(73) Proprietor: Kerckhaert B.V., 4581 AE Vogelwaarde (NL)
(72) Inventor: KERCKHAERT, Rudolf Karel Marie, B-9112 Sinaai (BE)
(74) Representative: Donné, Eddy

(56) References cited:
- EP-A- 0 633 079
- FR-A- 376 367
- FR-A- 406 416
- GB-A- 19 150 577

## Description

The present invention concerns a method for manufacturing a horseshoe provided with at least one clip, such as for example a toe clip or two side clips.

According to the known method for manufacturing horseshoes with a clip, a clip is drawn from a rod part with a predetermined length by means of a plastic deformation process in a direction which is mainly perpendicular to a top side of the rod part. The thus obtained clip mainly extends perpendicular to the top side of the rod part and is situated in the middle of the rod part, after which the rod part is bent so as to form the actual horseshoe.

A disadvantage of the known method for manufacturing horseshoes is that the clip is drawn from a longitudinal side of the rod part, so that a dent is created in this longitudinal side. For, the material required for the formation of the clip is obtained from this longitudinal side. As a result, the clip is positioned slightly inward in relation to the longitudinal side of the rod part. With the horseshoe obtained after the bending of the rod part, the clip is also positioned slightly inward in relation to the convex outer side of the horseshoe. In order to make the horseshoe fit well on the hoof, however, a recess must be filed in the hoof on the position where the clip will be situated after the horseshoe has been mounted. Apart from the work and time required for filing the recess in the hoof, the hoof is also weakened due to the formation of the recess. Moreover, a horseshoe with a dent in the convex outer side thereof is not so aesthetic.

The invention aims a method for manufacturing a horseshoe by means of which a horseshoe is obtained without the above-described disadvantages.

The document FR 406 416 A, representing the closest prior art, discloses a method for the manufacturing of horseshoes, in which first a rod part with a central cam-shaped part is cut from a straight rod. This cam-shaped part is flattened by forging and then bent perpendicular to the top side of the rod part in order to form a clip. Finally the rod part is bent into the form of the horseshoe.

According to the invention, a rod part with a predetermined length is formed to this end by cutting it from a straight rod, which rod part has a first longitudinal side, a top side, a bottom side and a second longitudinal side, whereby the length of the rod part depends on the aimed size of the horseshoe, whereby a part of the first longitudinal side is blanked out by means of a cutting tool, such that at least one cam-shaped part of the first longitudinal side remains, whereby this single or each cam-shaped part is subsequently plastically deformed in a direction which is mainly perpendicular to the top side of the rod part so as to form a clip, which mainly extends perpendicular to the top side, and whereby the rod part is bent so as to form the actual horseshoe.

Since, before the clip is formed by means of plastic deformation, a cam is first formed on the first longitudinal side of the rod part by cutting away parts of the first longitudinal side, so that at least one cam-shaped part remains, the material required for the formation of the clip must not be obtained from the longitudinal side of the rod part which at a later stage forms the convex outer side of the horseshoe. The blanking out of parts of the first longitudinal side of the rod part leads to the formation of a new longitudinal side which forms the convex outer side of the horseshoe after the rod part has been bent. After the clip has been formed by means of drawing from the cam-shaped part which remains after a part of the longitudinal side has been cut off, a clip is obtained which corresponds to the newly formed longitudinal side of the rod part. Thus, after the rod part has been bent, a horseshoe is obtained whose clip stands exactly on the convex outer side of the horseshoe. As a result, it is no longer necessary to file a recess in the hoof for the clip. Consequently, the hoof must not be weakened and the horseshoe can be mounted as such without any time-consuming filing operations being required.

According to a further development of the invention, it is particularly advantageous when, before the cam-shaped part is plastically deformed and the rod part is bent, the rod part is brought at forging temperature. Thanks to the fact that the rod part is at forging temperature, the drawing of the clip from the cam-shaped part and the bending of the rod part can be carried out quickly and without any risk of cracking.

Preferably, after the above-mentioned part has been blanked out from the first longitudinal side so as to form at least one cam-shaped part, at least one of the edges of the rod part forming the transition between a newly formed longitudinal side and the top and/or bottom side is worked so as to provide it with a radius or bevel. Thus is obtained that the convex outer edges of the horseshoe to be formed are not sharp, so that the horse cannot injure itself on the edges.

Possibly, according to a further development of the invention, the part of the first longitudinal side which is blanked out can be blanked out such that only one cam-shaped part remains, whereby the cam-shaped part which remains is situated either or not in the middle of the rod part so as to form symmetrical, asymmetrical horseshoes respectively. With asymmetrical horseshoes, one half of the horseshoe is bigger and rounder than the other half of the horseshoe. In order to be able to position the clip on the front side of the horseshoe, however, it is necessary that the cam-shaped part remaining after a part of the first longitudinal side of the rod part has been cut out, is situated somewhat off centre of this rod part. Thus can be obtained left and right horseshoes with a clip. When the cam-shaped part is situated in the middle of the rod part, a symmetrical horseshoe can be formed thereof.

According to another further development of the invention, the part of the first longitudinal side which is blanked out, is blanked out such that two cam-shaped parts remain which are situated at mainly one third and at mainly two thirds of the length of the rod part respectively. Here also, the positioning of the cams on the rod part can be selected such that symmetrical, left and right horseshoes can be formed thereof.

After the plastic deformation for the formation of the single or each clip and before the bending of the rod part, a cut can possibly be provided in the rod part.

Moreover, after the plastic deformation for the formation of the single or each clip and before the bending of the rod part, the ends of the rod part can be bevelled on the bottom side so as to form what are called sponges.

In order to obtain a flat horseshoe provided with regular rivet holes, after the bending of the rod part in order to form the horseshoe, the horseshoe can be flattened, and rivet holes can be punched in the horseshoe after the cooling.

Naturally, the invention also concerns a horseshoe obtained according to the method of the invention.

The invention will be further illustrated by means of a number of examples of embodiments, which will be described hereafter with reference to the drawings, in which:
figure 1 shows a top view of a rod;
figure 1A shows a sectional view over line I-I in figure 1;
figure 2 shows two rod part ends and the rod part which is cut from the rod when cutting off a rod part;
figure 3 shows a top view of the rod part;
figure 4 shows a similar top view of a rod part, whereby the hatching indicates what part of the first longitudinal side is cut out;
figure 5 shows a top view of the rod part with the cut-out part of the first longitudinal side;
figure 5A shows a sectional view over line V-V in figure 5;
figure 6 shows the rod part represented in figure 5, whereby the edges of the first longitudinal side are bevelled;
figure 6A shows a sectional view over line VI-VI of figure 6 to a larger scale;
figure 6B shows a view in perspective of the rod part represented in figure 6;
figure 7 shows a view in perspective of the rod part represented in figure 6, whereby a clip is drawn from the cam;
figure 7A shows a partial front view of the rod part at the height of the clip;
figure 7B shows a sectional view over line VII-VII of figure 7;
figure 7C shows a bottom view of a part of the rod part from figure 7 at the height of the clip;
figure 7D shows a top view of a part of the rod part at the height of the clip from figure 7;
figure 8 shows a view in perspective of a horseshoe provided with two clips;
figure 9 shows a bottom view of a horseshoe provided with one clip;
figure 9A shows a side view of the horseshoe represented in figure 9;
figure 9B shows a sectional view over line IX-IX of figure 9;
figure 9C shows a sectional view over line X-X of figure 9;
figure 10 shows a top view of a rod part provided with two cam parts; and
figures 11A to 11E included show a number of possible sectional profiles of the rod from which the rod parts can be formed.

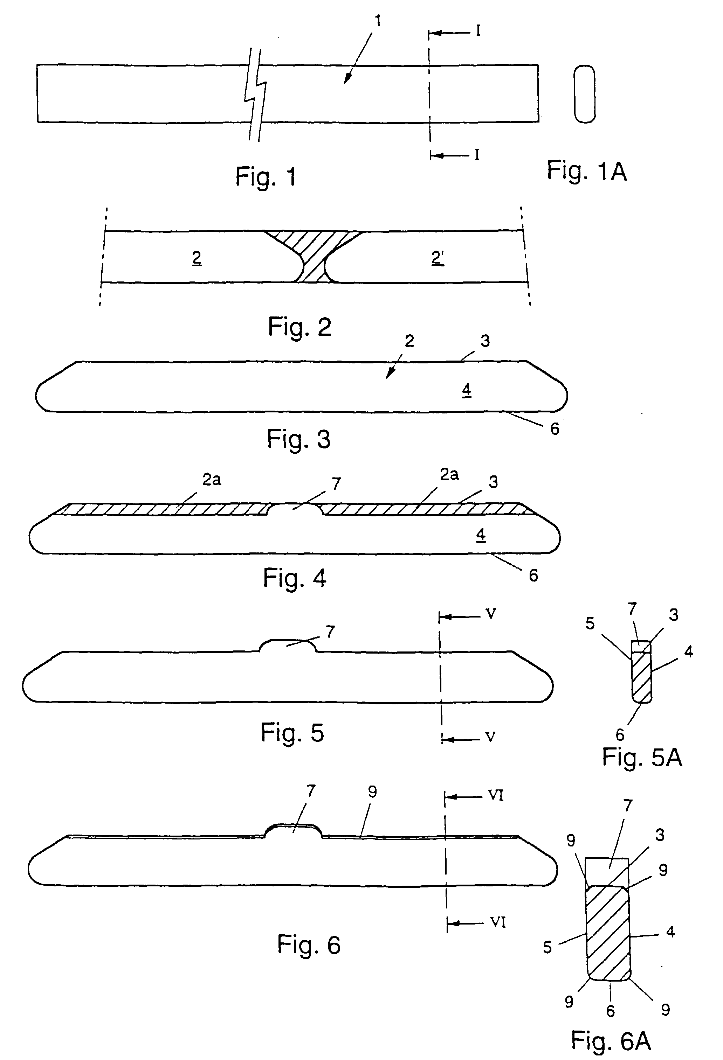

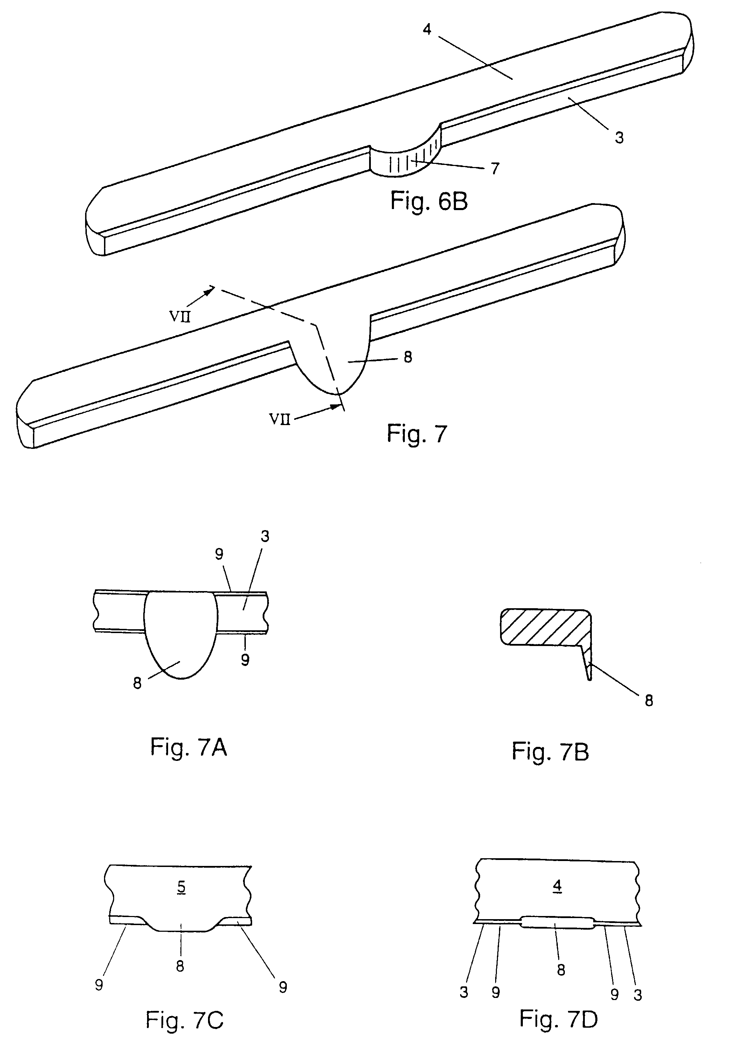

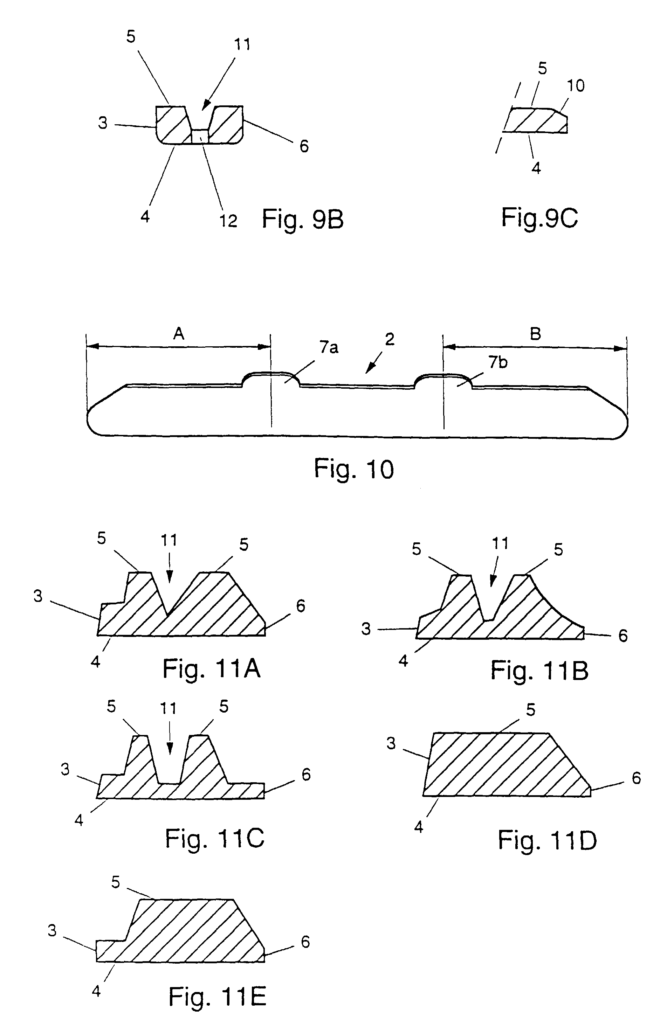

According to the invention, in order to form a horseshoe provided with at least one clip, a rod part as represented in figure 3 is formed by cutting it at a predetermined length from a rod as represented in figure 1. The rod forming the basic material of which the horseshoe manufacturer makes a horseshoe, may have a rectangular section, as is represented in figure 1A, but it may also have a section as is represented in figures 11A to 11E. In the embodiments represented in figures 11A to 11C included, the rod is already provided with a groove 11 in the bottom side 5, which groove 11 forms part of the cut of the finished horseshoe. Apart from the already mentioned bottom side 5, the rod part 2 has a top side 4, a first longitudinal side 3 and a second longitudinal side 6. After the rod part 2 has been bent into a horseshoe, the first longitudinal side 3 forms the convex outer side of the horseshoe, whereas the second longitudinal side 6 forms the concave inner side of the horseshoe. The length of the cut-off rod part 2 depends on the required size of the horseshoe. Preferably, when the rod part is cut, the ends of the rod part are directly shaped into a specific form by removing the hatched part from figure 2 during the cutting. From the thus obtained rod part 2 with rounded-off ends is then blanked out a part 2a, hatched in figure 4, by means of a cutting tool, such that at least one cam-shaped part 7 of the first longitudinal side 3 remains. The rod part in this case has a configuration as represented in figure 5 with a sectional view as represented in figure 5A. In this embodiment, after the part 2a of the first longitudinal side 3 has been blanked out so as to form at least the single cam-shaped part 7, the edges of the rod part 2 which form the transition between a newly formed longitudinal side and the top and/or bottom side 4, 5 are worked so as to be provided with a radius or bevel 9. After this treatment, the rod part 2 looks as is represented in figures 6, 6A and 6B. As is clearly represented in the sectional view of figure 6a, also the edges which are turned away from the cam part 7 and which confine the second longitudinal side 6, can be provided with a radius 9. In general, however, this radius or bevel is already provided in the rod 1 which serves as basic material.

Subsequently, the cam-shaped part 7 is plastically deformed in a direction which is mainly perpendicular to the top side 4 of the rod part 2 so as to form a clip 8 which mainly extends perpendicular to the top side 4. The rod part in this case has the embodiment as represented in figures 7, 7A, 7B, 7C and 7D. Especially figures 7A, 7B, 7C and 7D provide a good example of the embodiment of the clip 8. It is clear to see that the clip 8 corresponds to the other parts of the longitudinal side 3 and that there is no dent in the longitudinal side surface 3 at the height of the clip 8. Subsequently, the rod part 2 is bent so as to obtain a horseshoe shape.

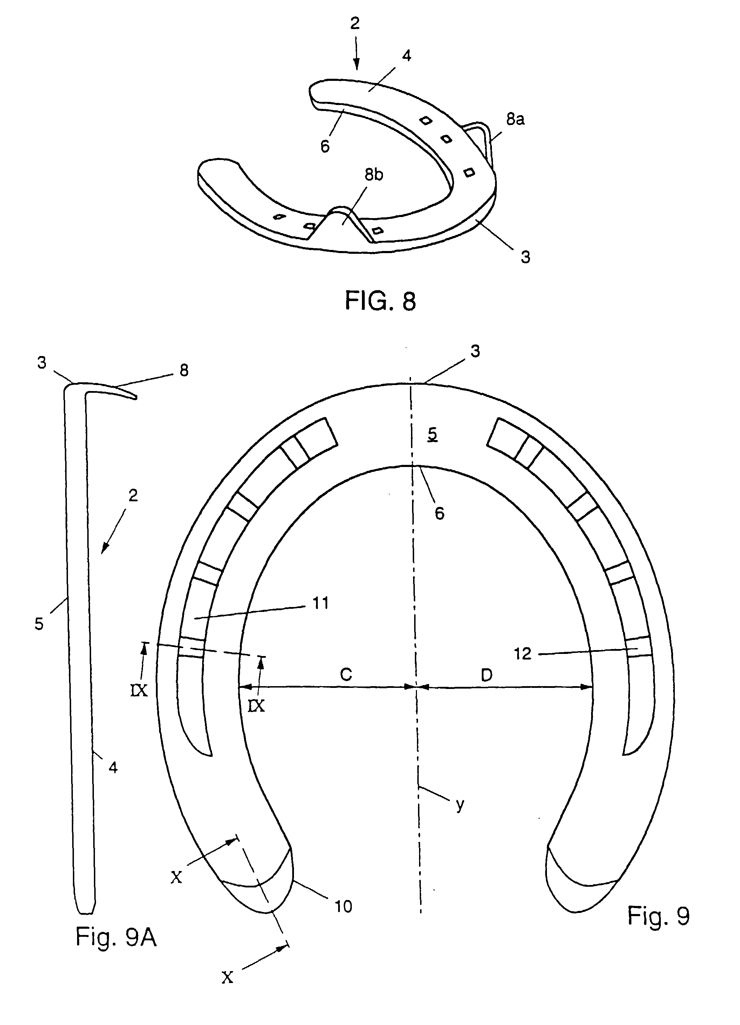

A thus manufactured product is represented in perspective in figure 8, and figures 9 and 9A respectively show a bottom and a side view of a horseshoe according to the invention.

The embodiment as represented in figure 8 is provided with two clips 8a, 8b. The embodiment as represented in figures 9 and 9a is provided with one clip 8. In the rod part 2 which has not been bent yet, a clip can be provided off centre or right in the middle on the rod part 2. With a centrally provided clip 8, the distances C and D should be identical in figure 9. As a result, such a horseshoe is symmetrical in relation to the axis Y represented in figure 9. When the clip 8 is provided off centre on the rod part 2, the left part of the horseshoe in figure 9 can for example make a larger curve and can be made rounder than the right part of the horseshoe. The clip 8 which is erected symmetrical in relation to the axis Y, is in this case situated on the front side of the hoof, but the rest of the horseshoe is adjusted to the asymmetrical shape which a hoof actually has. Thus, it is possible to obtain left and right horseshoes. With a left or right horseshoe, the distances indicated with C and D in figure 9 differ from one another.

Figure 10 shows a rod part 2 which is provided with two cam-shaped parts 7a and 7b. The distance of the cam parts in relation to the ends of the rod part 2 are indicated with A and B respectively. In the case of a symmetrical horseshoe, these distances A and B are equal. In the case of a horseshoe designed for the left leg, the distance A will be bigger than B, and in the case of a horseshoe designed for the right leg, the distance A will be smaller than B.

Figure 9 also clearly shows the cut 11 which is preferably provided after the plastic deformation for the formation of the single or each clip 8 and before the bending of the rod part 2. However, as already mentioned above, it is also possible that the rod 1 from which the horseshoe is formed is already provided with a groove 11 in which the cut 11 can be formed later by means of a post-treatment. Moreover, after the plastic deformation for the formation of the single or each clip 8, and before the bending of the rod part 2, the ends of the rod part 2 can be bevelled at the bottom side 5 so as to form sponges 10. The sponges 10 are clearly visible in the sectional view which is represented in figure 9C.

Figure 9B also shows a section of the horseshoe at the height of a rivet hole 12. These rivet holes 12 are already partly pre-formed when the cut 11 is formed. After the bending of the rod part 2 so as to form the horseshoe, and after the horseshoe has been flattened, the thus formed intermediate product is cooled. The rivet holes 12 can subsequently be easily punched through in a cooled state.

It is clear that the invention is by no means restricted to the above-described embodiment, and that various modifications can be made to it while still remaining within the scope of the invention. What is essential is that, by blanking out parts of the longitudinal side 3 of the rod part 2, a cam-shaped part 7 remains which provides the material from which the clip 8 can be formed, so that a horseshoe with a clip is obtained which corresponds precisely to the outer contour of the horseshoe.

## Claims

1. Method for manufacturing a horseshoe provided with at least one clip, such as for example a toe clip or two side clips, whereby a rod part (2) with a predetermined length is formed by cutting it from a straight rod (1), which rod part (2) has a first longitudinal side (3), a top side (4), a bottom side (5) and a second longitudinal side (6), whereby the length of the rod part (2) depends on the aimed size of the horseshoe, whereby a part (2a) of the first longitudinal side (3) of the rod part (2) is blanked out by means of a cutting tool, such that at least one cam-shaped part (7) of the first longitudinal side (3) remains, whereby this single or each cam-shaped part (7) is subsequently plastically deformed in a direction which is mainly perpendicular to the top side of the rod part (2) so as to form a clip (8), which mainly extends perpendicular to the top side (4), and whereby the rod part (2) is bent so as to form the actual horseshoe (H).

2. Method according to claim 1, characterized in that, before the cam-shaped part (7) is plastically deformed and the rod part (2) is bent, the rod part (2) is brought at forging temperature.

3. Method according to claim 1 or 2, characterized in that, after the above-mentioned part (2a) has been blanked out from the first longitudinal side (3) so as to form at least one cam-shaped part (7), at least one of the edges of the rod part (2) forming the transition between a newly formed longitudinal side and the top and/or bottom side (4,5) is worked so as to provide it with a radius or bevel (9).

4. Method according to any of the preceding claims, characterized in that the part (2a) of the first longitudinal side (3) which is blanked out is blanked out such that only one cam-shaped part (7) remains, whereby the cam-shaped part (7) which remains is situated either or not in the middle of the rod part (2) so as to form symmetrical, asymmetrical horseshoes respectively.

5. Method according to any of claims 1-3, characterized in that the part (2a) of the first longitudinal side (3) which is blanked out is blanked out such that two cam-shaped parts (7a, 7b) remain, which are situated at mainly one third and at mainly two thirds of the length of the rod part (2).

6. Method according to any of the preceding claims, characterized in that after the plastic deformation for the formation of the single or each clip (8) and before the bending of the rod part (2), a cut (11) can possibly be provided in the rod part (2).

7. Method according to any of the preceding claims, characterized in that after the plastic deformation for the formation of the single or each clip (8) and before the bending of the rod part (2), the ends of the rod part (2) on the bottom side (5) can be bevelled so as to form sponges.

8. Method according to any of the preceding claims, characterized in that, after the bending of the rod part (2) so as to form a horseshoe, the horseshoe is flattened, and in that rivet holes (12) are punched through the horseshoe after it has cooled.

## Patentansprüche

1. Verfahren zur Herstellung eines Hufeisens mit mindestens einem Stollen, wie beispielsweise ein Zehenstollen oder zwei Seitenstollen, wobei ein Stangenstück (2) mit einer bestimmten Länge durch Abschneiden von einer geraden Stange (1) geformt wird, welches Stangenstück (2) eine erste Längsseite (3), eine Oberseite (4), eine Unterseite (5) und eine zweite Längsseite (6) aufweist, wobei die Länge des Stangenstücks (2) von der beabsichtigten Größe des Hufeisens abhängig ist, wobei ein Teil (2a) der ersten Längsseite (3) des Stangenstücks (2) mittels eines Schneidewerkzeugs ausgeschnitten wird, derart, dass zumindest ein nockenförmiger Teil (7) der ersten Längsseite (3) verbleibt, wobei dieser eine oder jeder nockenförmige Teil (7) anschließend in eine Richtung, die hauptsächlich rechtwinklig zur Oberseite des Stangenstücks (2) gelegen ist, plastisch verformt wird, um einen Stollen (8) zu formen, der sich hauptsächlich rechtwinklig zur Oberseite (4) erstreckt, und wobei das Stangenstück (2) gebogen wird, um das eigentliche Hufeisen (H) zu bilden.

2. Verfahren gemäß Anspruch 1, dadurch gekennzeichnet, dass, bevor der nockenförmige Teil (7) plastisch verformt und das Stangenstück (2) gebogen wird, das Stangenstück (2) auf Schmiedetemperatur gebracht wird.

3. Verfahren gemäß Anspruch 1 oder 2, dadurch gekennzeichnet, dass, nach dem Ausschneiden des oben erwähnten Teils (2a) aus der ersten Längsseite (3) zum Formen zumindest eines nockenförmigen Teils (7), zumindest eine der Kanten des Stangenstücks (2), die den Übergang zwischen einer neugeformten Längsseite und der Ober- und/oder Unterseite (4,5) bildet, so bearbeitet wird, dass sie mit einem Radius oder einer Abschrägung (9) versehen ist.

4. Verfahren gemäß einem der vorgenannten Ansprüche, dadurch gekennzeichnet, dass der Teil (2a) der ersten Längsseite (3), der ausgeschnitten ist, derart ausgeschnitten ist, dass nur ein nockenförmiger Teil (7) verbleibt, wobei der verbleibende nockenförmige Teil (7) sich entweder in der Mitte des Stangenstücks (2) befindet oder nicht, um symmetrische beziehungsweise asymmetrische Hufeisen zu formen.

5. Verfahren gemäß einem der Ansprüche 1-3, dadurch gekennzeichnet, dass der Teil (2a) der ersten Längsseite (3), der ausgeschnitten ist, derart ausgeschnitten ist, dass zwei nockenförmige Teile (7a, 7b) verbleiben, die sich bei hauptsächlich einem Drittel und bei hauptsächlich zwei Dritteln der Länge des Stangenstücks (2) befinden.

6. Verfahren gemäß einem der vorgenannten Ansprüche, dadurch gekennzeichnet, dass nach der plastischen Verformung zur Formung des einzigen oder jeden Stollens (8) und vor dem Biegen des Stangenstücks (2) eventuell ein Schnitt (11) im Stangenstück (2) angebracht werden kann.

7. Verfahren gemäß einem der vorgenannten Ansprüche, dadurch gekennzeichnet, dass nach der plastischen Verformung zur Formung des einzigen oder jeden Stollens (8) und vor dem Biegen des Stangenstücks (2) die Enden des Stangenstücks (2) an der Unterseite (5) abgeschrägt werden können, um Abdachungen zu bilden.

8. Verfahren gemäß einem der vorgenannten Ansprüche, dadurch gekennzeichnet, dass nach dem Biegen des Stangenstücks (2) zum Formen eines Hufeisens das Hufeisen abgeflacht wird und dass nach dem Abkühlen des Hufeisens Nietöffnungen (12) durch dieses geschlagen werden.

## Revendications

1. Procédé pour fabriquer un fer à cheval muni d'au moins une attache telle que par exemple une attache antérieure ou deux attaches latérales, par lequel on obtient un élément (2) en forme de tige possédant une longueur prédéterminée en le découpant à partir d'une tige rectiligne (1), ledit élément (2) en forme de tige possédant un premier côté longitudinal (3), un côté supérieur (4), un côté inférieur (5) et un second côté longitudinal (6), la longueur de l'élément (2) en forme de tige dépendant de la dimension visée du fer à cheval, par lequel une partie (2a) du premier côté longitudinal (3) de l'élément (2) en forme de tige est découpée à l'aide d'un outil de coupe de telle sorte qu'au moins une partie (7) en forme de came du premier côté longitudinal (3) subsiste, par lequel cette partie (7) unique en forme de came ou chacune de ces dernières est soumise ultérieurement à une déformation plastique dans une direction qui s'étend perpendiculairement au côté supérieur de l'élément (2) en forme de tige de façon à former une attache (8) qui s'étend principalement perpendiculairement au côté supérieur (4), et par lequel l'élément (2) en forme de tige est plié de façon à former le fer à cheval (H) proprement dit.

2. Procédé selon la revendication 1, caractérisé en ce qu'avant de soumettre la partie (7) en forme de came à une déformation plastique et avant de plier l'élément (2) en forme de tige, l'élément (2) en forme de tige est amené à une température de forgeage.

3. Procédé selon la revendication 1 ou 2, caractérisé en ce que, après avoir découpé la partie (2a) susmentionnée du premier côté longitudinal (3) de façon à former au moins une partie (7) en forme de came, au moins un des bords de l'élément (2) en forme de tige formant la transition entre un côté longitudinal nouvellement formé et le ou les côtés supérieurs et/ou inférieurs (4, 5) est usiné pour obtenir un rayon ou un chanfrein (9).

4. Procédé selon l'une quelconque des revendications précédentes, caractérisé en ce que la partie (2a) du premier côté longitudinal (3) qui est découpée, est découpée de telle sorte que seule une partie (7) en forme de came subsiste, par lequel la partie (7) en forme de came qui subsiste est située ou non au milieu de l'élément (2) en forme de tige de façon à former des fers à cheval symétriques, asymétriques, respectivement.

5. Procédé selon l'une quelconque des revendications 1 à 3, caractérisé en ce que la partie (2a) du premier côté longitudinal (3) qui est découpée, est découpée de telle sorte que deux parties (7a, 7b) en forme de came subsistent, qui sont situées principalement à un tiers et principalement à deux tiers de la longueur de l'élément (2) en forme de tige.

6. Procédé selon l'une quelconque des revendications précédentes, caractérisé en ce qu'après la déformation plastique pour la formation de l'attache unique (8) ou de chacune de ces dernières et avant de plier l'élément (2) en forme de tige, on peut prévoir le cas échéant une découpe (11) dans l'élément (2) en forme de tige.

7. Procédé selon l'une quelconque des revendications précédentes, caractérisé en ce qu'après la déformation plastique pour la formation de l'attache unique (8) ou de chacune de ces dernières et avant de plier l'élément (2) en forme de tige, les extrémités de l'élément (2) en forme de tige peuvent être chanfreinées sur le côté inférieur (5) de façon à former des éponges.

8. Procédé selon l'une quelconque des revendications précédentes, caractérisé en ce qu'après avoir plié l'élément (2) en forme de tige de façon à former un fer à cheval, le fer à cheval est aplati et en ce que des trous de rivets (12) sont perforés, à travers le fer à cheval après le refroidissement de ce dernier.
